# EUROPÄISCHE PATENTSCHRIFT

(11) **EP 2 013 934 B1**
(45) Veröffentlichungstag und Bekanntmachung des Hinweises auf die Patenterteilung: **21.04.2010**
(21) Anmeldenummer: 06753483.4
(22) Anmeldetag: 04.05.2006
(51) Int. Cl.: H01M 8/04

(54) **KONTROLLVORRICHTUNG FÜR EINEN BRENNSTOFFZELLENSTAPEL**
CONTROL APPARATUS FOR A FUEL CELL STACK
DISPOSITIF DE CONTRÔLE POUR PILE À COMBUSTIBLE

(43) Veröffentlichungstag der Anmeldung: 14.01.2009
(73) Patentinhaber: Daimler AG, 70327 Stuttgart (DE); Ford Global Technologies, LLC, Dearborn MI 48126 (US)
(72) Erfinder: BELSCHNER, Werner, 74544 Michelbach a. d. Bilz (DE); KUGEL, Matthias, 70192 Stuttgart (DE); LEITZ, Jürgen, 73265 Dettingen (DE); MÜLLER, Ralf, 04552 Lobstaedt (DE); HÖRMANN, Jürgen, 88319 Aitrach (DE)
(74) Vertreter: JENSEN & SON
(86) Internationale Anmeldenummer: PCT/EP2006/004165
(87) Internationale Veröffentlichungsnummer: WO 2007/128328

(56) Entgegenhaltungen:
- WO-A-2004/038845
- DE-A1- 10 049 196
- DE-A1- 10 233 821
- DE-A1- 10 336 743
- DE-A1- 19 950 008
- DE-A1-102004 008 869

## Beschreibung

Die Erfindung betrifft eine Kontrollvorrichtung für einen Brennstoffzellenstapel mit einem Betriebskontrollmodul, wobei das Betriebskontrollmodul programmtechnisch und/oder schaltungstechnisch ausgebildet ist, um eine Vielzahl von normalbetriebsrelevanten Sensor-/Aktorsystemen zu kontrollieren, wobei die normalbetriebsrelevanten Sensor-/Aktorsysteme den Betriebszustand des Brennstoffzellenstapels im Normalbetrieb betreffen, und mit einem Sicherheitskontrollmodul, wobei das Sicherheitskontrollmodul programmtechnisch und/oder schaltungstechnisch ausgebildet ist, um sicherheitsrelevante Sensor-/Aktorsysteme zu kontrollieren, wobei die sicherheitsrelevanten Sensor-/Aktorsysteme die Sicherheitsfunktionen des Brennstoffzellenstapels betreffen.

Brennstoffzellenstapel stellen eine zukunftsweisende Alternative für die Energieversorgung von Fahrzeugen im Straßenverkehr dar, da durch den Einsatz von Brennstoffzellenstapeln die Belastung der Umwelt - insbesondere durch Abgase - drastisch reduziert werden kann.

Ein derartiger Brennstoffzellenstapel stellt ein komplexes technisches System dar, welches mit geeigneten Kontrollvorrichtungen gesteuert und/oder geregelt werden muss, wobei Kontrollvorrichtungen für Fahrzeuge in einer großen Vielfalt aus dem Stand der Technik bekannt sind.

Beispielsweise offenbart die Druckschrift DE 10336743 A1 ein Steuerungssystem mit mehreren Modulen für einen Antriebsstrang eines Fahrzeugs, wobei der Antriebsstrang optional auch eine Brennstoffzelle umfasst. Bei diesem Steuerungssystem wird vorgeschlagen, ein erstes Modul zur Integration einer Antriebsstrangsteuerung und ein zweites Modul zur Kontrolle der Leistungserzeugung und/oder - übertragung vorzusehen, wobei die beiden Module unabhängig voneinander programmiert werden können.

Die Druckschrift DE 10 2004 008869 A1 offenbart ein Steuergerät sowie ein Computerprogramm zum Steuern eines Antriebsaggregates eines Fahrzeuges. Das Steuergerät umfasst eine Hardwareplattform, auf der das Computerprogramm abläuft, wobei in dem Computerprogramm eine Vielzahl von Modulen zur Realisierung von Steuerungs-, Sicherheits- und/oder Überwachungsfunktionen für das Antriebsaggregat des Fahrzeugs realisiert sind. Diese Druckschrift bildet wohl den nächstkommenden Stand der Technik.

Der Erfindung liegt die Aufgabe zugrunde, eine Kontrollvorrichtung der eingangs genannten Art zu schaffen, die einen sicheren Betrieb eines Brennstoffzellenstapels in einem Fahrzeug unterstützt.

Diese Aufgabe wird gelöst durch einen Kontrollvorrichtung mit den Merkmalen des Anspruchs 1. Bevorzugte und/oder vorteilhafte Ausführungsformen sind durch die Unteransprüche, die nachfolgende Beschreibung und/oder die beigefügte Figur offenbart.

Die erfindungsgemäße Kontrollvorrichtung ist ausgebildet und/oder geeignet für einen Brennstoffzellenstapel, insbesondere zur Verwendung in einem Fahrzeug, und umfasst mindestens ein Betriebskontrollmodul und mindestens ein Sicherheitskontrollmodul, wobei beide Kontrollmodule jeweils programmtechnisch und/oder schaltungstechnisch zur Kontrolle von Sensor-/Aktorsystemen ausgebildet sind. Die Kontrolle eines Sensor-/Aktorsystems ist beispielsweise gegeben, wenn über ein oder mehrere Sensorsysteme Messsignale in digitaler und/oder analoger Form an das Kontrollmodul übertragen werden, die Messsignale in dem Kontrollmodul auf Basis einer Steuerung oder Regelung verarbeitet werden und ein Stellsignal an das zugeordnete Aktorsystem als Ergebnis der Steuerung oder Regelung ebenfalls digital und/oder analog übermittelt wird.

Für eine klare Architektur der Kontrollvorrichtung werden die kontrollierten Sensor-/Aktorsysteme bevorzugt in normalbetriebsrelevante Sensor-/Aktorsysteme und in sicherheitsrelevante Sensor-/Aktorsysteme unterteilt. Die normalbetriebsrelevanten Sensor-/Aktorsysteme betreffen dabei die Regelung oder Steuerung des Brennstoff zellenstapels innerhalb des Normalbetriebs, so dass durch diese Sensor-/Aktorsysteme beispielsweise eine der Anforderung entsprechende Leistungserzeugung erfolgt. Diese Sensor-/Aktorsysteme stellen beispielsweise sicher, dass eine ausreichende Menge an Brennstoff und Oxidant in die Brennstoffzellen geliefert werden, die Temperatur der einzelnen Komponenten der Brennstoffzelle oder des Brennstoffzellenstapels für den jeweiligen Betriebszustand optimiert ist.

Die sicherheitsrelevanten Sensor-/Aktorsysteme sorgen dagegen dafür, dass der Brennstoffzellenstapel nicht in einen unzulässigen Betriebszustand gerät. Ein unzulässiger Betriebszustand liegt insbesondere vor, wenn eine Beschädigung der Brennstoffzellen oder des Brennstoffzellenstapels oder von an dem Brennstoffzellenstapel angeschlossenen Komponenten zu befürchten ist. Beispiele für derartige unzulässige Betriebszustände sind beispielsweise Drücke oder Temperaturen in dem Brennstoffzellenstapel oder Komponenten davon, die einen vorgegebenen Sicherheitsgrenzwert überschreiten.

Erfindungsgemäß ist das Sicherheitskontrollmodul als eine gegenüber dem Betriebskontrollmodul autark arbeitende Baugruppe ausgebildet.

Gemäß dieser erfinderischen Ausbildung ist das Sicherheitskontrollmodul in der Lage unabhängig von dem Betriebskontrollmodul mit sicherheitsrelevanten Sensor-/Aktorsystemen zu kommunizieren und diese zu kontrollieren.

Hierfür ist das Sicherheitskontrollmodul als eine von dem Betriebskontrollmodul unabhängige Hardware ausgeführt, die insbesondere über eigene Logikschaltungen und/oder einen oder mehrere eigene Verarbeitungseinheiten, insbesondere Mikroprozessoren, DSP's, ASIC's, FPGA's oder ähnliches verfügt. Insbesondere ist das Sicherheitskontrollmodul als Embedded System mit einem nur auf den Sicherheitskontrollmodul ablaufenden Betriebssystem ausgebildet.

Der Erfindung liegt dabei die Überlegung zugrunde, sicherheitsrelevante Funktionen des Brennstoffzellenstapels in einer elektronischen Baugruppe zu konzentrieren, welche unabhängig von anderen Funktionsbaugruppen oder Kontrollmodulen die sicherheitsrelevanten Funktionen erfüllen kann. Bevorzugt ist das Sicherheitskontrollmodul als Stand-Alone System ausgebildet.

Auf dieses Weise ist sichergestellt, dass im Fall einer gestörten oder fehlenden Kommunikation mit anderen Kontrollmodulen das Sicherheitskontrollmodul autark und/oder selbständig die Sicherheitsfunktionen umsetzen kann.

Ein weiterer Vorteil der Erfindung ist, dass das Sicherheitskontrollmodul von der Kontrolle, insbesondere Regelung oder Steuerung, von Sensor-/Aktorsystemen entlastet ist, die den Normalbetrieb des Brennstoffzellenstapels betreffen. Da aufgrund der Vielzahl der notwendigen Komponenten für den Betrieb eines Brennstoffzellenstapels der Kontrollaufwand für einen Brennstoffzellenstapel enorm ist, wird durch die Separierung der Sicherheitsfunktionen in dem Sicherheitskontrollmodul auch die Reaktionszeit und die Geschwindigkeit bei der Umsetzung der Sicherheitsfunktionen verbessert.

Es ist bevorzugt, dass das Sicherheitskontrollmodul zur Kontrolle der meisten oder aller sicherheitsrelevanter Sensor-/Aktorsysteme des Brennstoffzellenstapels ausgebildet ist. Hierbei liegt eine graduelle Umsetzung der Erfindung vor, wobei bevorzugt alle Sicherheitsfunktionen in dem Sicherheitskontrollmodul implementiert sind. Bei weniger bevorzugten Ausführungsformen kann auch ein geringer Anteil der Sicherheitsfunktionen in dem Betriebskontrollmodul umgesetzt sein. Im Rahmen der Erfindung ist es auch möglich, dass mehrere Sicherheitskontrollmodule verwendet werden, wobei jedes Sicherheitskontrollmodul als autark arbeitende Baugruppe ausgebildet ist.

Es ist vorteilhaft, wenn das Sicherheitskontrollmodul zur Umsetzung der Sicherheitsfunktionen auch bei gestörter oder fehlender Kommunikation zu anderen Kontrollmodulen, insbesondere zu dem Betriebskontrollmodul, ausgebildet ist. Bei einer besonders bevorzugten Ausführungsform weist das Sicherheitskontrollmodul einen Speicher auf, in dem alle zur Initialisierung notwendigen Programme, Daten und/oder Parameter abgelegt sind, so dass bei dem Start des Sicherheitskontrollmoduls keine Kommunikation zu anderen Kontrollmodulen notwendig ist. Bei alternativen Ausführungsformen werden die genannten Programme, Daten und/oder Parameter von anderen Kontrollmodulen beim Start des Sicherheitskontrollmoduls übergeben, wobei nach der Initialisierung eine weitere Kommunikation zu den anderen Kontrollmodulen für den Betrieb des Sicherheitskontrollmoduls nicht mehr notwendig ist.

Bei einer vorteilhaften Weiterbildung ist das Sicherheitskontrollmodul als Sicherheitselektronik ausgebildet. Vorzugsweise umfasst das Sicherheitskontrollmodul eine Selbstüberwachung (Watchdog), eine autarke Energieversorgung und/oder eine Notfallenergieversorgung und/oder erlaubt einen autarken Systemstart.

Das Sicherheitskontrollmodul weist bevorzugt Schnittstellen zur Ankopplung der Sensoren und Aktoren der sicherheitsrelevanten Sensor-/Aktorsysteme auf. Es ist möglich, dass diese Schnittstellen als BUS-Schnittstelle, zum Beispiel für einen CAN-Bus, ausgebildet sind. In diesem Fall ist das Sicherheitskontrollmodul bevorzugt gleichzeitig als Gateway ausgebildet, so dass das BUS-System zu den Sensoren und Aktoren unabhängig von einem weiteren BUS-System, mit dem das Sicherheitskontrollmodul mit anderen Funktionseinheiten oder Kontrollmodulen kommuniziert, ausgebildet ist.

Alternativ oder ergänzend ist vorgesehen, dass die Sensoren beziehungsweise Aktoren individuell und/oder einzeln mit dem Sicherheitskontrollmodul verbunden sind. Letztgenannte Ausführung hat den Vorteil, dass bei Ausfall einer der Datenleitungen zwischen Sicherheitskontrollmodul und Sensor/Aktorsystem zumindest die verbleibenden Sensor-/Aktorsysteme noch ansteuerbar sind.

Bei einer Weiterbildung der Erfindung ist das Sicherheitskontrollmodul und das Betriebskontrollmodul als Teil einer hierarchischen Steuerungsarchitektur ausgebildet.

Bei einer Ausführungsform wird die oberste Hierarchie durch ein zentrales Steuerungsgerät gebildet, welches zur Steuerung eines Mobils, insbesondere eines Fahrzeugs ausgebildet ist.

Dieses zentrale Steuergerät ist über ein BUS-System unter anderem mit dem Betriebskontrollmodul verbunden. Vorzugsweise bilden zentrales Steuergerät und Betriebskontrollmodul eine Master-Slave-Kombination, wobei das zentrale Steuergerät als Master ausgebildet ist. Der BUS ist beispielsweise als CAN-BUS oder SAE J 1850-BUS oder BM-LAN realisiert.

Das Sicherheitskontrollmodul ist entweder in der Master-Ebene oder in der Slave-Ebene angeordnet, wobei es in der Master-Ebene von dem zentralen Steuergerät Daten, insbesondere Betriebsparameter erhält und Daten, zum Beispiel in Form von Warnhinweisen, an das zentrale Steuergerät übergibt.

Alternativ dazu ist das Sicherheitskontrollmodul in der Slave-Ebene angeordnet, wobei es von dem zentralen Steuergerät Betriebsbefehle erhält.

Zur Kommunikation und Weitergabe von Daten, insbesondere von Warnhinweisen, ist optional vorgesehen, dass das Sicherheitskontrollmodul, insbesondere über ein BUS-System, mit dem Betriebskontrollmodul und/oder dem zentralen Steuergerät kommuniziert. Wie bereits weiter oben erwähnt ist es aber vorteilhaft, wenn die Kommunikation mit dem sicherheitsrelevanten Sensor-/Aktorsystemen unabhängig von dem BUS-System oder den BUS-Systemen zwischen Sicherheitskontrollmodul und Betriebskontrollmodul und/oder zentralen Steuergerät erfolgt.

Weitere Merkmale, Vorteile und Wirkung der Erfindung ergeben sich aus der nachfolgenden Beschreibung der Figur eines Ausführungsbeispiels der erfindungsgemäßen Kontrollvorrichtung. Dabei zeigt:

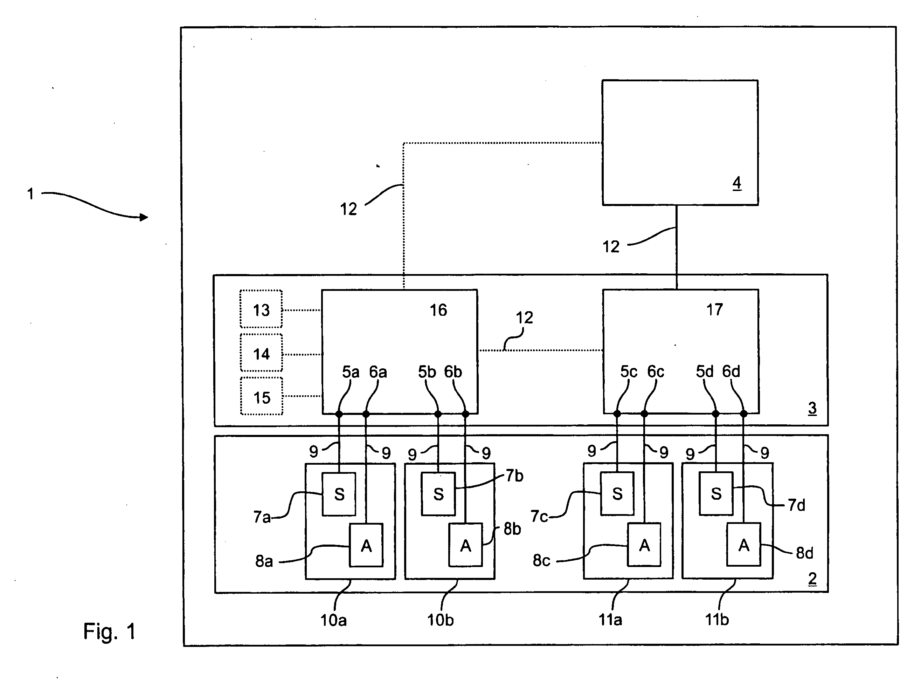

Fig. 1 ein erstes Ausführungsbeispiel einer erfindungsgemäßen Kontrollvorrichtung in Blockdarstellung.

Die Figur 1 zeigt eine schematische Blockdarstellung eines Fahrzeugs 1, in dem ein Brennstoffzellenstapel 2, eine Kontrollvorrichtung 3 sowie eine zentrale Steuereinheit 4 dargestellt und miteinander verschaltet sind. Bei dem Brennstoffzellenstapel 2 handelt es sich beispielsweise um eine Brennstoffzelle in PEM-Bauart. Die zentrale Steuereinheit 4 ist als übergeordnete Steuereinheit für eine Vielzahl von Funktionsbaugruppen in dem Fahrzeug 1 ausgebildet.

In der Kontrollvorrichtung 3 sind zwei separate Baugruppen vorgesehen, nämlich ein Betriebskontrollmodul 17 und ein Sicherheitskontrollmodul 16. Das Sicherheitskontrollmodul 16 weist zwei Eingänge (Inputs) 5a, 5b und zwei Ausgänge (Outputs) 6a, 6b auf, die eins-zu-eins mit Sensoren 7a, 7b beziehungsweise Aktoren 8a,8b über Datenleitungen 9 verbunden sind. Bei den Datenleitungen 9 kann es sich um separate digitale Datenleitungen zur unidirektionalen oder bidirektionalen Datenübertragung handeln. Alternativ werden mit den Datenleitungen 9 oder einem Teil der Datenleitungen 9 analoge Signale übertragen. Es ist auch möglich, dass Sensor/Aktorkombination, die zu einem gemeinsamen Sensor/Aktorsystem 10a, 10b gehören, durch eine gemeinsame Datenleitung 9 informationstechnisch versorgt sind. Die Sensor-/Aktorsysteme 10a bzw. 10b werden durch eine Kombination von Sensoren und Aktoren 7a, 8a beziehungsweise 7b beziehungsweise 8b gebildet, wobei die zu einem Sensor/Aktorsystem 10a, 10b gehörenden Komponenten zusammen mit dem Sicherheitskontrollmodul 16 einen Stellkreis oder einen Regelkreis bilden.

In analoger Weise ist das Betriebskontrollmodul 17 mit Sensor-/Aktorsystemen 11a beziehungsweise 11b verschaltet.

Die Zuordnung der Sensor-/Aktorsysteme 10a, 10b und 11a, 11b zu den Kontrollmodul 16 beziehungsweise 17 erfolgt aufgrund der Funktion der Sensor-/Aktorsysteme 10a, 10b, 11a, 11b. So werden alle sicherheitsrelevanten Sensor-/Aktorsysteme und/oder Sensor-/Aktorsysteme, die eine Sicherheitsfunktion unterstützen, dem Sicherheitskontrollmodul 16 zugeordnet.

Beispiele für sicherheitsrelevante Sensor-/Aktorsysteme 10a, 10b sind Drucksensor-Überdruckventil-Systeme in hydraulischen oder pneumatischen Systemen.

Die zentrale Steuereinheit 4 ist über eine Kommunikationsleitung 12 mit dem Betriebskontrollmodul 17, die beispielsweise als BUS-Leitung, insbesondere als CAN-BUS, ausgebildet ist, verbunden. Optional sind Datenleitungen zwischen Betriebskontrollmodul 17 und Sicherheitskontrollmodul 16 und/oder zwischen zentraler Steuereinheit 4 und Sicherheitskontrollmodul 16 vorgesehen.

Von der Funktionsweise her übernimmt das Betriebskontrollmodul 17 sämtliche für die Ansteuerung des Brennstoffzellenstapels 2 notwendigen Regel- und/oder Steuervorgänge. Diesbezügliche Informationen oder Anforderungen erhält das Betriebskontrollmodul 17 bevorzugt über die Datenleitung 12 von der zentralen Steuereinheit 4. Die zentrale Steuereinheit 4 ist beispielsweise über weitere Datenleitungen (nicht dargestellt) mit einem Sensor zur Erfassung der Pedalstellung des Fahrzeugs 1 verbunden, nimmt die aktuelle Pedalstellung als Messwert auf und übergibt dem Betriebskontrollmodul 17 eine entsprechende Leistungsanforderung. Diese Leistungsanforderung wird dann von dem Betriebskontrollmodul 17 über die Sensor-/Aktorsysteme 11a, 11b, beziehungsweise weitere Sensor-/Aktorsysteme umgesetzt.

Das Sicherheitskontrollmodul 16 dagegen ist ausschließlich zur Überwachung und Einhaltung von Sicherheitsfunktionen zuständig. Um in jedem Betriebszustand die Funktionsfähigkeit des Sicherheitskontrollmoduls 16 sicherstellen zu können, ist das Sicherheitskontrollmodul optional mit Notstromversorgung 13, einem Speicher 14 für ein Betriebssystem, Daten oder Parameter zum Betrieb des Sicherheitskontrollmoduls 16, und/oder mit einer Überwachungseinheit 15, die die Funktion des Sicherheitskontrollmoduls 16 im Sinne eines Watchdogs überwacht, ausgebildet.

Durch die dargestellte Architektur der Gesamtsteuerung des Fahrzeugs 1 ist zum Einen sichergestellt, dass in jedem Betriebszustand der Gesamtsteuereinrichtung auf jeden Fall die Sicherheitsfunktionen durch das Sicherheitskontrollmodul 16 erhalten bleiben, da das Sicherheitskontrollmodul 16 unabhängig von den anderen Funktionsmodulen diese Sicherheitsfunktionen wahrnehmen kann. Zum Zweiten ist das Betriebskontrollmodul 17 von diesen Sicherheitsfunktionen entlastet und kann seine gesamte Rechenleistung zur Steuerung beziehungsweise Regelung des Brennstoffzellenstapels 2 im normalen Betriebszustand verwenden. Betriebskontrollmodul 17 und Sicherheitskontrollmodul 16 sind dabei als zwei autark voneinander arbeitende Baugruppen ausgebildet.

Selbstverständlich ist es auch möglich, diese beiden Baugruppen auf einer gemeinsamen Platine anzuordnen, wobei jedoch sicher zu stellen ist, dass die eigenständige und/oder autarke Betriebsweise zumindest für das Sicherheitskontrollmodul 16 erhalten bleibt.

## Patentansprüche

1. Kontrollvorrichtung (3) für einen Brennstoffzellenstapel (2)
mit einem Betriebskontrollmodul (17), wobei das Betriebskontrollmodul (17) programmtechnisch und/oder schaltungstechnisch ausgebildet ist, um eine Vielzahl von normalbetriebsrelevante Sensor-/Aktorsysteme (11a,b) zu kontrollieren, wobei die normalbetriebsrelevanten Sensor-/Aktorsysteme (11a,b) den Betriebzustand des Brennstoffzellenstapels (2) im Normalbetrieb betreffen, und
mit einem Sicherheitskontrollmodul (16), wobei das Sicherheitskontrollmodul (16) programmtechnisch und/oder schaltungstechnisch ausgebildet ist, um sicherheitsrelevante Sensor-/Aktorsysteme (10a,b) zu kontrollieren, wobei die sicherheitsrelevanten Sensor-/Aktorsysteme (10a,b) die Sicherheitsfunktionen des Brennstoffzellenstapels (2) betreffen,
**dadurch gekennzeichnet, dass**
das Sicherheitskontrollmodul (16) als eine gegenüber dem Betriebskontrollmodul (17) autark arbeitende Baugruppe ausgebildet ist.

2. Kontrollvorrichtung (3) nach Anspruch 1, **dadurch gekennzeichnet, dass** das Sicherheitskontrollmodul (16) zur Kontrolle der meisten oder aller sicherheitsrelevanter Sensor-/Aktorsysteme (10a,b) des Brennstoffzellenstapels (2) ausgebildet ist.

3. Kontrollvorrichtung (3) nach Anspruch 1 oder 2, **dadurch gekennzeichnet, dass** das Sicherheitskontrollmodul (16) zur Kontrolle der sicherheitsrelevanten Sensor-/Aktorsysteme (10a,b) auch bei gestörter oder fehlender Kommunikation zu anderen Kontrollmodulen (4, 17) ausgebildet ist.

4. Kontrollvorrichtung (3) nach einem der vorhergehenden Ansprüche, **dadurch gekennzeichnet, dass** das Sicherheitskontrollmodul (16) als Sicherheitselektronik ausgebildet ist.

5. Kontrollvorrichtung (3) nach einem der vorhergehenden Ansprüche, **dadurch gekennzeichnet, dass** das Sicherheitskontrollmodul (16) Schnittstellen (5a,b,6,a,b) zur Ankopplung der Sensoren (7a,b) und Aktoren (8a,b) der sicherheitsrelevanten Sensor-/Aktorsysteme (10a,b) aufweist.

6. Kontrollvorrichtung (3) nach Anspruch 5, **dadurch gekennzeichnet, dass** die Schnittstellen (5a,b,6,a,b) individuell den Sensoren (7a,b) oder Aktoren (8a,b) zugeordnet sind.

7. Kontrollvorrichtung (3) nach einem der vorhergehenden Ansprüche, **dadurch gekennzeichnet, dass** das Sicherheitskontrollmodul (16) und/oder das Betriebskontrollmodul (17) über ein BUS-System (12) miteinander und/oder mit einem zentralen Steuergerät (4), welches zur Steuerung eines Mobils (1) ausgebildet ist, kommuniziert.

8. Kontrollvorrichtung (3) nach Anspruch 7, **dadurch gekennzeichnet, dass** die Kommunikation zwischen den sicherheitsrelevanten Sensor-/Aktorsystemen (10a,b) und dem Sicherheitskontrollmodul (16) unabhängig von dem BUS-System (12) erfolgt.

9. Kontrollvorrichtung (3) nach einem der vorhergehenden Ansprüche, **dadurch gekennzeichnet, dass** die sicherheitsrelevanten Sensor-/Aktorsysteme (10a,b) eine beliebige Auswahl oder alle der nachfolgenden: Temperatursensoren, Drucksensoren, Gassensoren, Leitfähigkeitssensoren, Stromsensoren, Spannungssensoren, Isolationsmessung, Sicherheitsschleifen, Hauptschütze, Ventile, Motoren, Sicherungen, Halbleiterschalter und/oder Relais umfassen.

10. Kontrollvorrichtung nach einem der vorhergehenden Ansprüche, **dadurch gekennzeichnet, dass** das Sicherheitskontrollmodul (16) als Mehr-Mikroprozessorsystem mit Hardware-Schaltungen und das Betriebskontrollmodul (17) als Ein-Mikroprozessorsystem ausgebildet ist.

## Claims

1. Control apparatus (3) for a fuel cell stack (2), comprising
an operation control module (17), the operation control module (17) being designed in terms of programming and/or in terms of circuitry to control a plurality of sensor/actuator systems (11a, b) relevant to normal operation, the sensor/actuator systems (11a, b) relevant to normal operation relating to the operating state of the fuel cell stack (2) during normal operation, and
a safety control module (16), the safety control module (16) being designed in terms of programming and/or in terms of circuitry to control a plurality of sensor/actuator systems (10a, b) relevant to safety, the sensor/actuator systems (10a, b) relevant to safety relating to the safety functions of the fuel cell stack (2),
**characterised in that**
the safety control module (16) is designed as an assembly which operates autonomously with respect to the operation control module (17).

2. Control apparatus (3) according to claim 1, **characterised in that** the safety control module (16) is designed to control most or all of the sensor/actuator systems (10a, b) of the fuel cell stack (2) which are relevant to safety.

3. Control apparatus (3) according to claim 1 or 2, **characterised in that** the safety control module (16) is designed to control the sensor/actuator systems (10a, b) relevant to safety even if communication with other control modules (4, 17) is malfunctioning or has failed.

4. Control apparatus (3) according to any of the preceding claims, **characterised in that** the safety control module (16) is designed as a safety electronics unit.

5. Control apparatus (3) according to any of the preceding claims, **characterised in that** the safety control module (16) has interfaces (5a, b, 6a, b) for coupling the sensors (7a, b) and actuators (8a, b) of the sensor/actuator systems (10a, b) relevant to safety.

6. Control apparatus (3) according to claim 5, **characterised in that** the interfaces (5a, b, 6a, b) are individually assigned to the sensors (7a, b) or actuators (8a, b).

7. Control apparatus (3) according to any of the preceding claims, **characterised in that** the safety control module (16) and/or the operation control module (17) communicate(s) via a bus system (12) with each other and/or with a central control unit (4) designed for the control of a vehicle (1).

8. Control apparatus (3) according to claim 7, **characterised in that** the communication between the sensor/actuator systems (10a, b) relevant to safety and the safety control module (16) is independent of the bus system (12).

9. Control apparatus (3) according to any of the preceding claims, **characterised in that** the sensor/actuator systems (10a, b) relevant to safety include a selection or all of the following: temperature sensors, pressure sensors, gas sensors, conductivity sensors, current sensors, voltage sensors, insulation meters, safety loops, main contactors, valves, motors, fuses, semiconductor switches and/or relays.

10. Control apparatus (3) according to any of the preceding claims, **characterised in that** the safety control module (16) is designed as a multiple microprocessor system with hardware circuitry and the operation control module (17) is designed as a single microprocessor system.

## Revendications

1. Dispositif (3) de contrôle pour pile (2) à combustible comprenant un module (17) de contrôle du fonctionnement, le module (17) de contrôle du fonctionnement étant réalisé au niveau de la technique de programmation et / ou de la technique de circuit pour contrôler une pluralité de systèmes (11a, b) de capteurs / actionneurs intervenant en fonctionnement normal, les systèmes (11a, b) de capteurs / actionneurs intervenant en fonctionnement normal concernant l'état de fonctionnement de la pile (2) à combustible en fonctionnement normal, et comprenant un module (16) de contrôle de sécurité, le module (16) de contrôle de sécurité étant réalisé au niveau de la technique de programmation et / ou de la technique de circuit pour contrôler des systèmes (10a, b) de capteurs / actionneurs intervenant dans la sécurité, les systèmes (10a, b) de capteurs / actionneurs intervenant dans la sécurité concernant les fonctions de sécurité de la pile (2) à combustible, **caractérisé en ce que** le module (16) de contrôle de sécurité est réalisé sous la forme d'un ensemble fonctionnant de manière autonome par rapport au module (17) de contrôle du fonctionnement.

2. Dispositif (3) de contrôle selon la revendication 1, **caractérisé en ce que** le module de contrôle de sécurité (16) est configuré pour le contrôle de la plupart ou de tous les systèmes d'actionneurs / capteurs (10a, b) intervenant dans la sécurité de la pile (2) à combustible.

3. Dispositif (3) de contrôle selon la revendication 1 ou 2, **caractérisé en ce que** le module de contrôle de sécurité (16) est configuré pour le contrôle des systèmes d'actionneurs / capteurs (10a, b) intervenant dans la sécurité et également lors d'une communication perturbée ou manquante avec d'autres modules de contrôle (4, 17).

4. Dispositif (3) de contrôle selon l'une quelconque des revendications précédentes, **caractérisé en ce que** le module (16) de contrôle de sécurité est configuré sous forme d'une électronique de sécurité.

5. Dispositif (3) de contrôle selon l'une quelconque des revendications précédentes, **caractérisé en ce que** le module (16) de contrôle de sécurité présente des interfaces (5a, b, 6, a, b) pour coupler les capteurs (7a, b) et les actionneurs (8a, b) des systèmes de capteurs / actionneurs (10a, b) intervenant dans la sécurité.

6. Dispositif (3) de contrôle selon la revendication 5, **caractérisé en ce que** les interfaces (5a, b, 6, a, b) sont affectées individuellement aux capteurs (7a, b) ou aux actionneurs (8a, b).

7. Dispositif (3) de contrôle selon l'une quelconque des revendications précédentes, **caractérisé en ce que** le module (16) de contrôle de sécurité et / ou le module (17) de contrôle de fonctionnement communiquent via un système BUS (12) l'un avec l'autre et 1 ou avec un dispositif (4) de commande central, lequel est configuré pour commander un élément mobile (1).

8. Dispositif (3) de contrôle selon la revendication 7, **caractérisé en ce que** la communication entre les systèmes (10a, b) de capteurs et / ou d'actionneurs intervenant dans la sécurité et le module (16) de contrôle de sécurité s'effectue indépendamment du système BUS (12).

9. Dispositif (3) de contrôle selon l'une quelconque des revendications précédentes, **caractérisé en ce que** les systèmes (10a, b)de capteurs / d'actionneurs comprennent un choix quelconque ou l'ensemble des éléments suivants : capteurs de température, capteurs de pression, capteurs de gaz, capteurs de conductibilité, capteurs de courant, capteurs de tension, mesure d'isolation, boucles de sécurité, contacteurs principaux, vannes, moteurs, dispositifs de sécurité, commutateurs statiques et / ou relais.

10. Dispositif de contrôle selon l'une quelconque des revendications précédentes, **caractérisé en ce que** le module (16) de contrôle de sécurité est configuré sous forme d'un système à microprocesseurs multiples avec des circuits matériels et le module (17) de contrôle de fonctionnement est configuré sous forme d'un système de microprocesseur simple.
